(19) Europäisches Patentamt European Patent Office Office européen des brevets

(11) **EP 4 737 202 A1**

(12) **EUROPEAN PATENT APPLICATION**

(43) Date of publication:
06.05.2026 Bulletin 2026/19

(21) Application number: 24210982.5

(22) Date of filing: 05.11.2024

(51) International Patent Classification (IPC):
*B60L 58/13* (2019.01)    *B60L 58/16* (2019.01)
*B60L 3/00* (2019.01)

(52) Cooperative Patent Classification (CPC):
**B60L 3/0046; B60L 58/13; B60L 58/16;**
B60L 2240/545

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Volvo Truck Corporation**
**405 08 Göteborg (SE)**

(72) Inventors:
• **ALTAF, Faisal**
**421 43 VÄSTRA FRÖLUNDA (SE)**
• **LILLMAA, Henri**
**463 72 LÖDÖSE (SE)**

(74) Representative: **Kransell & Wennborg KB**
**P.O. Box 27834**
**115 93 Stockholm (SE)**

(54) **ROBUST ENERGY- OR RANGE-AWARE ADAPTIVE STATE-OF-CHARGE (SOC) WINDOW CONTROL**

(57)    A computer system (200) for adaptive state-of-charge (SoC) window control is provided, including processing circuitry (210) configured to: obtain a minimum required usable energy value (220) for an electric energy storage system (ESS, 240); obtain indications (230) of uncertainties for ESS usable energy estimation associated with at least one of i) aging of the ESS, ii) usage of the ESS, and iii) measurement errors of one or more parameters of the ESS; adapt, based on the indicated uncertainties, the minimum required usable energy value to a most likely minimum required usable energy value and/or a range of minimum required usable energy values for the ESS; define a SoC window for the ESS to match the most likely minimum required usable energy value and/or a value within the range of minimum required usable energy values, and control a discharging and/or charging (260) of the ESS in accordance with the SoC window.

Fig. 2

EP 4 737 202 A1

## Description

## TECHNICAL FIELD

The disclosure relates generally to the field of battery energy storage systems. In particular aspects, the disclosure relates to a more robust energy- or range-aware adaptive state-of-charge (SoC) window control for such systems. The disclosure can be applied to energy storage systems such as used in heavy-duty vehicles, such as trucks, buses, and construction equipment, among other vehicle types. Although the disclosure may be described with respect to a particular vehicle, the disclosure is not restricted to any particular vehicle. The envisaged solution is applicable also to energy storage systems used outside of a vehicle.

## BACKGROUND

A battery energy storage system (ESS, or BESS) usually includes one or more battery packs. The ESS is used to store energy in a safe, robust and preferably optimal way, and to deliver/receive power as part of a range of different applications under varying operation conditions. If used for example in an electric vehicle, the performance (in terms of e.g. usable energy and power ability) of the ESS may have a direct impact on the performance of the vehicle (in terms of e.g. chargeability, drivability, average speed, and range). A problem with contemporary ESS solutions is that their performance attributes degrade over time due to aging of the batteries, both as a result of usage but also due to calendar aging, which in turn leads to a reduced vehicle performance over time.

To limit the wear on the batteries, fully discharging and/or charging the batteries is often avoided by defining a so-called state-of-charge (SoC) window, that establishes limits for when to stop discharging and/or charging the ESS. For a particular SoC window, there is a particular usable energy (expressed in terms of kilowatt hours, kWh, or joules) that is deliverable from/to the ESS while meeting requirements for durability, safety, drivability, charging speed, thermal management, and similar. The usable energy is a nonlinear function of battery characteristics such as capacity, impedance, open-circuit-voltage (OCV), the SoC window, temperature, and similar. As battery aging leads to capacity fading and impedance growth, the usable energy, and thus also the performance of the vehicle, also decreases over time as a function of the state-of-health (SoH) of the ESS, which may worsen the experience of a user of the vehicle.

To meet usable energy requirements over the lifetime of the ESS, a battery management system (BMS) typically employes one of two solutions. A first such solution includes to use a fixed SoC window control strategy in which the SoC window limits are fixed according to assumed end-of-life (EoL) capacity and impedance characteristics of the ESS. Such a strategy is however no optimal from e.g. a mission-planning perspective, as the usable energy and hence vehicle range will (monotonically) decrease with time. Phrased differently, the user may have more than required range at beginning-of-life (BoL) of the ESS, and the range will then fade and finally reach the required value once the EoL of the ESS is reached. Such time-varying vehicle performance may worsen the user experience, and a fixed SoC window control strategy may also be less than optimal from a battery aging dynamics viewpoint as it may potentially lead to higher aging rate. The other solution includes to adaptively adjust the SoC window over time as a function of ESS aging dynamics, to always deliver a same required usable energy from BoL to EoL. Phrased differently, as the ESS ages, the SoC window is increased to maintain the corresponding usable energy at a constant level. Although perhaps better than the first, fixed SoC window solution, attempting to adaptively adjust the SoC window may be prone to errors introduced due to e.g. parametric uncertainties, measurement errors and e.g. state estimation errors, and similar.

The present disclosure seeks to improve upon contemporary solutions for adaptively adjusting the SoC window over time.

## SUMMARY

According to a first aspect of the disclosure, there is provided a computer system that includes processing circuitry. The processing circuitry is configured to obtain a minimum required usable energy value for an ESS. The processing circuitry is configured to obtain one or more indications of one or more uncertainties for ESS usable energy estimation associated with at least one of i) aging of the ESS, ii) usage of the ESS, and iii) measurement errors of one or more parameters of the ESS. The processing circuitry is further configured to adapt, based on the indicated one or more uncertainties, the minimum required usable energy value to a most likely minimum required usable energy value and/or a range of minimum required usable energy values for the ESS. The processing circuitry is configured to define a SoC window for the ESS to match the most likely minimum required usable energy value and/or a value within the range of minimum required usable energy values. The processing circuitry is further configured to control a discharging and/or charging of the ESS in accordance with the (defined) SoC window. The first aspect of the disclosure may seek to solve the problem of how to improve upon contemporary adaptive SoC window control strategies. A technical benefit may include that the envisaged SoC window control strategy is made more robust (i.e. tolerant) to errors/uncertainties in input parameters (such as current, voltage, temperature, measurement errors, state-of-everything, SoX, such as SoC and SoH, estimation errors, and similar).

Optionally, in some examples, including in at least one preferred example, the one or more uncertainties for ESS usable energy estimation may be associated with ohmic losses of the ESS due to impedance increasing with age and/or temperature of the ESS. A technical benefit may include that such losses may thus be accounted for when deciding how to define the SoC window, thus reducing the risk of failing to meet the minimum required usable energy target.

Optionally, in some examples, including in at least one preferred example, the one or more uncertainties for the ESS usable energy estimation may be associated with estimation errors of ESS SoC and/or SoH. A technical benefit may include that such uncertainties may thus be accounted for when deciding how to define the SoC window, thus reducing the risk of failing to meet the minimum required usable energy target.

Optionally, in some examples, including in at least one preferred example, the one or more uncertainties for ESS usable energy estimation may be associated with unusable ESS capacity due to cell-to-cell and/or pack-to-pack balancing errors. A technical benefit may include that such unusable ESS capacity may thus be accounted for when deciding how to define the SoC window, thus reducing the risk of failing to meet the minimum required usable energy target.

Optionally, in some examples, including in at least one preferred example, the one or more uncertainties for ESS usable energy estimation may be associated with ESS pack-to-pack SoC estimation synchronization errors. A technical benefit may include that such synchronization errors may thus be accounted for when deciding how to define the SoC window, thus reducing the risk of failing to meet the minimum required usable energy target.

Optionally, in some examples, including in at least one preferred example, the ESS may form part of an electric vehicle, and the processing circuitry may be further configured to calculate the minimum required usable energy value based on a minimum range requirement for/of the vehicle. A technical benefit may include that the risk of failing to meet a minimum range requirement may thus also be reduced, as the range depends on the usable energy.

Optionally, in some examples, including in at least one preferred example, the processing circuitry may be further configured to define the range of minimum required usable energy values as a mean usable energy value plus one or more confidence intervals for the usable energy value. A technical benefit may include that the processing circuitry may thus make statistically based assumptions when deciding how to define the SoC window, as it is made aware of e.g. how certain the estimated usable energy is (as defined by e.g. the confidence interval(s)).

Optionally, in some examples, including in at least one preferred example, the processing circuitry may be configured to define the SoC window based on an upper limit of the range of minimum required usable energy. A technical benefit may include that the SoC window may thus be defined to account for a worst-case scenario in terms of losses and uncertainties, by providing less usable energy but more robustness against the uncertainties/errors.

Optionally, in some examples, including in at least one preferred example, the processing circuitry may be configured to define the SoC window based on a mean value of the range of minimum required usable energy. A technical benefit may include that the SoC window may thus be defined in accordance with a statistically most likely (e.g. in a maximum likelihood sense) scenario, and offer a sound compromise between usable energy and robustness to the uncertainties/errors.

Optionally, in some examples, including in at least one preferred example, the processing circuitry may be configured to define the SoC window based on a lower limit of the range of minimum required usable energy. A technical benefit may include that the SoC window may thus be defined to account for a best-case scenario in terms of losses and uncertainties, by providing more usable energy at the expense of being (slightly) less robust against the uncertainties/errors.

According to a second aspect of the disclosure, there is provided an ESS. The ESS includes e.g. one or more battery packs (or at least multiple battery cells), and the computer system of the first aspect (or any example thereof). The second aspect may seek to solve the problem of how to provide an ESS and way of control thereof that is more robust against the uncertainties/errors as discussed with reference to the computer system of the first aspect, with the technical benefits already mentioned with reference thereto.

According to a third aspect of the disclosure, there is provided an electric vehicle. The vehicle includes the computer system of the first aspect and the ESS. The third aspect may seek to solve the problem of how to provide an electric vehicle that is capable of more robustly deciding on a SoC window to meet a minimum required usable energy. A technical benefit may include for example that the vehicle will be more likely to always perform in accordance with an expected usable energy, and in that e.g. mission-planning for such a vehicle may be simplified compared to that for other vehicles not making use of the envisaged solution.

According to a fourth aspect of the disclosure, there is provided a (computer-implemented) method, e.g. a method as performed by the computer system of the first aspect. The method includes obtaining, by processing circuitry of a computer system (such as that/those of the first aspect), the minimum required usable energy value for the ESS; obtaining, by the processing circuitry, the one or more indications of the one or more uncertainties for ESS usable energy estimation associated with at least one of i), ii) and iii) as defined in the first aspect; adapting, by the processing circuitry and based on the indicated one or more uncertainties, the minimum required usable energy value to a most likely minimum required usable energy value and/or (to) a range of minimum required usable energy values for the ESS; defining, by the processing circuitry, the SoC window for the ESS to match the most likely minimum required usable energy value and/or a value within the range of minimum required usable energy values, and controlling, by the processing circuitry, the discharging and/or charging of the ESS in accordance with the (defined) SoC window. The fourth aspect may seek to solve the problem of how to provide an improved method for SoC window control as described already herein with reference to the computer system of the first aspect, and with the technical benefits described with reference thereto.

According to a fifth aspect of the disclosure, there is provided a computer program product. The computer program product includes program code for performing, when executed by e.g. the processing circuitry, the method of the fourth aspect (or any example thereof). The fifth aspect may seek to solve the problem of how to provide/distribute program code for performing the method of the fourth aspect.

According to a sixth aspect of the disclosure, there is provided a computer-readable storage medium. The storage medium includes instructions which, when executed by e.g. the processing circuitry, cause the processing circuitry to perform the method of the second aspect. In some examples, the storage medium may be non-transitory. The sixth aspect may seek to solve the problem of how to provide a data-carrier for e.g. a computer system and processing circuitry, that includes instructions for the processing circuitry for how to carry out the method of the fourth aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

**BRIEF DESCRIPTION OF THE DRAWINGS**

Examples are described in more detail below with reference to the appended drawings.

**FIG. 1** schematically illustrates an example of a contemporary SoC window control strategy, according to an example.
**FIG. 2** schematically illustrates examples of one or more computer systems for more robust adaptive SoC window control, according to one or more examples.

**FIG. 3** schematically illustrates a flowchart of one or more methods for more robust adaptive SoC window control, such as e.g. performed by the computer system of FIG. 2, according to one or more examples.
**FIG. 4** schematically illustrates an example computational flow of how to adapt a minimum required usable energy value, according to one or more examples.
**FIGS. 5A, 5B** and **5C** schematically illustrate examples of progression of usable energy over ESS lifetime, according to an example.
**FIGS. 6A, 6B** and **6C** schematically illustrate examples of various SoC window definition strategies, according to examples.
**FIG. 7A** schematically illustrates an example electric vehicle including the computer system of FIG. 2, according to an example.
**FIG. 7B** schematically illustrates a stationary, non-vehicle entity including the computer system of FIG. 2, according to an example.
**FIG. 8** is a schematic diagram of an exemplary computer system for implementing examples disclosed herein, according to an example.

**DETAILED DESCRIPTION**

The detailed description set forth below provides information and examples of the disclosed technology with sufficient detail to enable those skilled in the art to practice the disclosure.

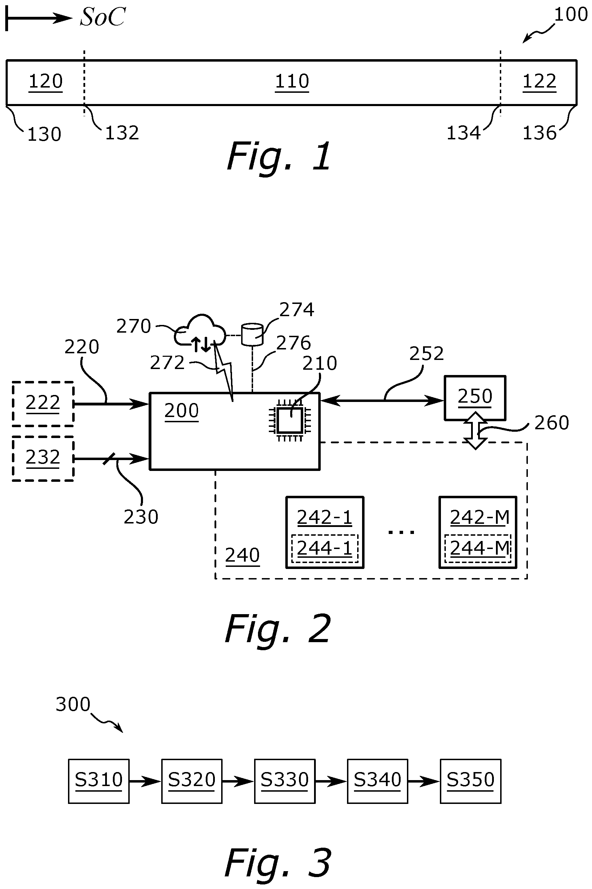

FIG. 1 schematically illustrates an example of a contemporary SoC window control strategy 100. Here, the possible SoC values for the ESS (or e.g. a battery pack of the ESS, or similar) ranges from a minimum possible SoC 130 (corresponding to e.g. a fully discharged ESS) to a maximum possible SoC 136 (correspond to e.g. a fully charged ESS). To avoid fully discharging or charging the ESS (that would otherwise accelerate the aging of and/or risk damaging the batteries of the ESS), the SoC window control strategy 100 includes to define a lower SoC limit 132 below which discharging of the ESS is not allowed, and similarly an upper SoC limit 134 above which charging of the ESS is not allowed. The area 110 between the lower and upper limits 132 and 134 is referred to as the SoC window, while the areas 120 and 122 below the lower limit 132 and the upper limit 134, respectively, are referred to as e.g. buffers, or similar. During normal operation of the ESS, only the energy available when discharging from the upper limit 134 to the lower limit 132 is thus available to the user, and is referred to as a current usable energy of the ESS if complying with the SoC window. When presenting the current level of charge to the user, this value may be rescaled such that a SoC at the lower limit 132 will be presented as "0 %" and a SoC at the upper limit 134 will be presented as "100 %", or similar, which prevents the user from wondering why the battery is not allegedly fully discharged or charged. As the ESS ages, the energy stored by the ESS at e.g. the upper SoC limit 134 will, if the limit 134 is kept fixed, decrease, as e.g. the ESS is able to store more energy when fully charged at its BoL than towards or at its EoL. Consequently, the user may experience that what appears to be a fully charged ESS will correspond to e.g. less and less range (if the ESS is used to power an electric vehicle) of the vehicle over time, which may worsen the user experience. As discussed earlier herein, one contemporary SoC window control strategy includes to keep the limits 132 and 134 fixed over time, according to expected EoL ESS capacity and e.g. impedance characteristics. In such a solution, the usable energy corresponding to the SoC window 110 will (monotonically) decrease with time, which may worsen the user experience as e.g. 100% presented SoC will correspond to less and less distance/range, and may potentially lead to higher aging rate of the ESS. In addition, from a battery aging dynamics perspective, the fixed SoC window strategy may also result in a higher aging rate of the ESS.

As also discussed earlier herein, another solution to this problem may include to adjust the limits 132 and 134 over time, such that e.g. the usable energy is kept (at least somewhat more) constant over time. However, this strategy may risk reducing the size of one or both of the buffers 120 and 122, as at least one of the limits 132 and 134 would have to be moved towards the respective end 130 and 136 in order to expand the SoC window 110 to compensate for the same SoC no longer corresponding to a same stored energy, and consequently serve to further accelerate the aging of the ESS. In addition, how to adapt the limits 132 and 134 (and thereby the SoC window 110) may not be a very robust approach as there may be errors made when for example estimating states (such as SoC, SoH and similar), when measuring e.g. one or more battery parameters (such as for example voltage and temperature), and how to expand the SoC window to compensate for energy fading due to battery aging may thus be challenging.

As will now be described with reference first also to FIGS. 2 and 3, the present disclosure provides a solution for how to make such adaptive SoC window control strategies more robust.

**FIG. 2** schematically illustrates various examples of a computer system 200 that includes processing circuitry 210.

**FIG. 3** schematically illustrates a flowchart of various examples of a method 300 as implemented/performed by the computer system 200 and processing circuitry 210.

The processing circuitry 210 is configured to obtain (e.g. as part of an operation S310 of the method 300) a minimum required usable energy value $E_{req}$ for an ESS 240, e.g. as part of a signal 220. The signal 220 may arrive from an entity 222 such as a mission-planning software or similar, and be based on a minimum required range for a vehicle in which the ESS 240 is used. For example, the ESS 240 may include one or more battery packs 242-1 to 242-M (where $M$ is an integer indicating the total number of such battery packs), and may be used to receive, store and deliver energy as part of operation of the vehicle. For example, the ESS 240 may provide and/or receive power 260 to/from one or more entities 250, where the one or more entities 250 may for example include (in an electric vehicle scenario) one or more electrical machines (such as for propelling the vehicle), one or more generators (such as one or more of the electrical machines being driven in reverse), one or more auxiliary systems of the vehicle, and similar. For an electric vehicle scenario, the entity 222 may for example determine how much energy that is required for the vehicle to complete a particular driving route, based on e.g. topological data, road data (such as inclination data, banking data, surface type data, etc.), weather data (such as temperature, wind speed, wind direction, etc.), and similar. This required energy, i.e. the minimal required energy value $E_{req}$, may then be communicated to and received by the processing circuitry 210 via the signal 220. In other examples, if the ESS 240 is for example not used as part of a vehicle but instead as part of a stationary solution, such as in an off-grid solution, a grid solution, or similar, but there may still be a desire for the ESS 240 to provide a minimum usable energy for some particular task, and the minimum required usable energy value $E_{req}$ may then instead correspond to the energy deemed necessary to complete that particular task. In what follows, if not stated to the contrary, the envisaged solution will however be presented in an electric vehicle scenario, wherein the ESS 240 is used to e.g. power the vehicle.

The processing circuitry 210 is further configured to obtain (e.g. as part of an operation S320 of the method 300) one or more indications of one or more uncertainties $\{\sigma_i\}$ (where $i \in [1, N]$ and N the total number of such uncertainties) for ESS usable energy estimation, as part of e.g. received one or more signals 230. The one or more signals 230 may for example be provided to the processing circuitry 210 by one or more entities 232 suitable for estimating, or otherwise being knowledgeable about, such uncertainties. In particular, the one or more uncertainties $\{\sigma_i\}$ are associated with at least one of i) aging of the ESS 240, ii) usage of the ESS 240, and iii) measurement errors of one or more parameters of the ESS 240. As envisaged herein, uncertainties may for example be tolerances and/or provided in a more probabilistic sense, e.g. as confidence intervals, standard deviations, and similar, for one or more parameters of the categories i), ii) and iii). Such values may be obtained from theoretical and/or numerical models, by statistical analysis over time (that tracks e.g. how measurements of relevant parameters statistically perform over time), from one or more battery management units (BMUs) 244-1 to 244-M that may or may not be provided as part of each battery pack 242-1 to 242-M, or similar. Other examples include to obtain at least some of the uncertainties from manufacturer data, such as from one or more datasheets, and/or from e.g. laboratory experiments or similar. For example, if a Kalman-filter (or similar) is used for SoC estimation, the covariance matrix of such a filter may be indicative of the uncertainty of the SoC state estimate, and may be used to generate error bounds on the same.

The processing circuitry 210 is further configured to adapt (e.g. as part of an operation S330 of the method 300) the minimum required usable energy value $E_{req}$ based on the indicated one or more uncertainties $\{\sigma_i\}$. For example, the value $E_{req}$ may be adapted to a new value $E_{req}$, or to a range of minimum required usable energy values $[E_{reqLow}, E_{reqHigh}]$, or similar, for the ESS 240.

The processing circuitry 210 is further configured to define (e.g. as part of an operation S340 of the method 300) a SoC window $[SoC_{winLow}, SOC_{winHigh}]$ (i.e. to define the lower and upper SoC limits 132 and 134 described with reference to FIG. 1) for the ESS 240, such that the SoC window matches the most likely minimum required usable energy $E_{req}^*$ and/or a value within the range of minimum required usable energy values $[SoC_{winLow}, SoC_{winHigh}]$. As envisaged herein, adapting the SoC window to match $E_{req}$ may include to make sure that the SoC window is such that the usable energy corresponding to discharging from $SoC_{winHigh}$ to $SoC_{winLow}$ is at least $E_{req}^*$, or similar. As envisaged herein, adapting the SoC window to match a value within the interval $[E_{reqLow}, E_{reqHigh}]$ may include to make sure that such discharging of the SoC window corresponds to a usable energy that is somewhere within the interval $[E_{reqLow}, E_{reqHigh}]$.

The processing circuitry 210 is further configured to, after having defined (i.e. adapted) the SoC window, control (as part of e.g. an operation S350 of the method 300) the discharging and/or charging 260 of the ESS 240 in accordance with this SoC window. For example, the processing circuitry 210 may be configured to control (e.g. by exchanging one or more signals 252) the one or more entities 250, and to make sure that the ESS 240 is not e.g. discharged and/or charged beyond the SoC window. The processing circuitry 210 may for example implement one or more algorithms/models for estimation of one or more parameters of the ESS 240 and battery packs 242-1 and 242-M required to estimate SoC of the ESS 240 (and/or of each of the battery packs 242-1 to 242-M), and may receive values of the involved parameters from e.g. the BMUs 244-1 to 244-M and/or from some other entity, if the processing circuitry 210 is not capable of calculating such values on its own based on one or more other values. For example, to estimate a current SoC of the ESS 240 may follow conventional methods for such SoC-estimation, and the processing circuitry 210 may use the estimate of the current SoC of the ESS 240 to make sure that e.g. further discharging of the ESS 240 is not possible once the SoC reaches the lower limit of the SoC window, and/or such that further charging of the ESS 240 is not possible once the SoC reaches the upper limit of the SoC window. For example, the processing circuitry 210 may be configured to communicate with the one or more entities 250 (via the one or more signals 252) to instruct them not to draw (or provide) more power from (or to) the ESS 240 once a SoC window limit is reached, and/or e.g. to close or open one or more switches provided in between the ESS 240 and one or more entities 250 to make sure that no further power exchange takes place, and similar. As envisaged herein, the processing circuitry 210 may use one or more already available strategies for controlling the discharging and/or charging of an ESS in accordance with a SoC window, as the improvement of the envisaged solution is not within the control of the charging and/or discharging of the ESS 240 in itself but in how the SoC window used for such control is obtained.

As envisaged herein, that the processing circuitry 210 sends or receives a "signal" does not necessarily mean that there are dedicated signals only for the transferring of the associated information. Instead, a "signal" may for example correspond to reading or writing from/to a memory space or similar, e.g. the processing circuitry 210 may obtain e.g. the minimum required usable energy $E_{req}$, the one or more uncertainties $\{\sigma_i\}$, etc., by reading from a memory to which some other entity has already written such data. Likewise, the processing circuitry 210 may e.g. write the values required to define the SoC window to such a memory once the SoC window has been determined, write e.g. the adapted minimum required usable energy value $E_{req}^*$ and/or the values used to define the interval $E_{reqLow}, E_{reqHigh}]$, and similar, to the memory such that one or more other entities that requires such data may read from the memory, and similar. Phrased differently, "a signal" is here used to indicate any possible means of transferring information/data between two entities, be it by using an electric signal, a magnetic signal, an electromagnetic signal, an optical signal, a mechanical signal, reading and/or writing from a memory, and similar. For example, the processing circuitry 210 may in some examples be configured to communicate with a cloud-based service 270 (via e.g. a wireless link 272) and/or with a storage 274 (via e.g. a wireless link such as 272 and/or via a wired link 276), where the storage 274 may be external to the processing circuitry 210 and computer system 200 or internal to the computer system 200 and e.g. internal to the processing circuitry 210 as well. As envisaged herein, any transferring of information may for example include writing to and/or reading from the cloud-based service 270 and/or the storage 274, and similar. For example, the processing circuitry 210 and computer system 200 may thus not necessarily be located close to and/or in a same entity (such as a vehicle) the battery packs 242-1 to 242-M and ESS 240, but may in some examples e.g. be remotely located and control the discharging and/or charging of the ESS 240 remotely, e.g. via the cloud-based service 270, via radio communication, via the Internet, and similar. In other examples, any transferring of information between two entities may for example take place using one or more shared data buses, such as e.g. a CAN-bus, LIN-bus, or similar commonly used in vehicles. Phrased differently, the envisaged solution does not rely on the computer system 200 and the ESS 240 being located together, as long as the computer system 200 and processing circuitry 210 may somehow obtain the indicated minimum required usable energy $E_{req}$ and the one or more uncertainties $\{\sigma_i\}$, and e.g. provide some form of control signal such that the discharging and/or charging of the ESS 240 can be made in accordance with the SoC defined by the processing circuitry 210.

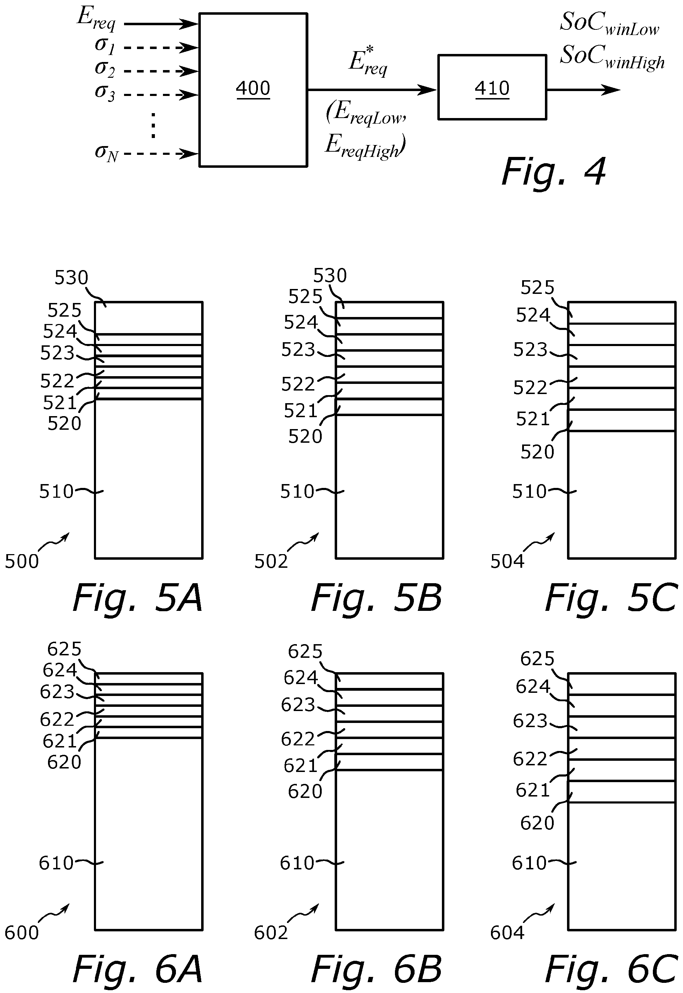

**FIG. 4** schematically illustrates an example computational flow for adapting/defining a SoC window as envisaged herein. A usable energy adaptation block 400 (as e.g. implemented by the processing circuitry 210) receives as input the minimum required usable energy value $E_{req}$ and one or more uncertainties $\sigma_i$ for ESS usable energy estimation. Based on $E_{req}$ and $\{\sigma_i\}$, the block 400 determines (i.e. outputs) e.g. the adapted minimum required energy value $E^*_{req}$ and/or the range of minimum required energy values [$E_{reqLow}$, $E_{reqHigh}$], that is in turn provided as input to a SoC window defining/adapting block 410 (as e.g. implemented by the processing circuitry 210). The block 410 uses the input $E^*_{req}$ and/or ($E_{reqLow}$, $E_{reqHigh}$) to define (i.e. output) the SoC window, by defining the lower and upper SoC limits $SoC_{winLow}$ and $SoC_{winHigh}$ (corresponding to e.g. 132 and 134 in FIG. 1). The resulting SoC window defined by these limits may then be transferred further downstream, and be used by e.g. a control functionality (as e.g. implemented by the processing circuitry 210) responsible for controlling the discharging and/or charging of the ESS.

**FIGS. 5A, 5B** and **5C** schematically illustrate various examples of how uncertainty ranges may impact the adaptation of the SoC window and its impact on the usable energy available to the user over the lifetime of the ESS.

FIG. 5A shows a situation 500 corresponding to a BoL of the ESS. The usable energy is indicated by the area 510. Here, there are six uncertainties/errors taken into account, corresponding to e.g. ohmic losses 520 due to impedance and aging, application efficiency losses 521, SoX estimation errors 522 (such when estimating SoH, SoC, and similar), cell-to-cell balancing errors 523, pack-to-pack balancing errors 524 and pack-to-pack SoX synchronization errors 525. Of course, the number/types of uncertainties may be different in other examples. There is also an energy buffer 530 that is not available to the user at this point in time. The various areas in FIG. 5A are indicative of relative sizes, e.g. how much energy that is deemed "uncertain" due to the various uncertainties 520-525 in comparison with the usable energy 510 and energy buffer 530.

FIG. 5B shows a situation 502 corresponding to a time somewhere in between the BoL and EoL of the ESS. Here, it can be seen that the relative importance of the uncertainties 520-525 have increased in size, and that their impact on the adaptation of the SoC window and the usable energy 510 is thus larger than at BoL situation 500. The energy buffer 530 has been reduced to account for some of decrease in usable energy 510 due to aging of the ESS, and the impact of the uncertainties may thus be larger as the usable energy 510 decreases due to aging.

FIG. 5C shows a situation 503 corresponding to an EoL of the ESS, wherein the uncertainties have an even further impact as the usable energy 510 has continued to decrease due to aging. Here, the energy buffer 530 previously shown in FIGS. 5A and 5B is removed, to somewhat limit the decrease of usable energy. In summary of all of FIGS. 5A, 5B and 5C, it may be seen that as the usable energy of the ESS decreases due to aging, the impact of the uncertainties on the determining of the SoC window needed to comply with a minimum required usable energy value such as $E_{req}$ increase with time, illustrating the importance of the solution as provided herein and the capability to take into account the size of the uncertainties in order to more robustly define the SoC window. For example, sensor accuracies as well as model accuracies over the lifetime of the ESS will likely not remain constant over time. Ohmic losses may be estimated, and the increase in uncertainty may be tracked. However, ohmic losses may be characterized with respect to SoC, temperature and in many cases also with respect to current direction and amplitude. Consequently, over the lifetime of the ESS, the uncertainty of sensors increase and/or in some state estimators (such as SoQ for capacity, SoR for ohmic losses), that may in turn have negative impact in terms of uncertainties for SoC and remaining energy (SoE) estimations. As one example, also the SoC adaptation itself may improve/-worsen the uncertainties of the capacity and charge estimation (SoQ and SoC, respectively), as the OCV-SOC curve is often not linear and has "flatter" and "more steep" regions, that may have direct impact on the estimation confidence level/uncertainty.

**FIGS. 6A, 6B** and **6C** schematically illustrate various examples of how the one or more uncertainties associated with the ESS usable energy estimation and the adapted minimum required usable energy (value and/or range of values) are used to adapt/define the SoC window. Here, the included uncertainties correspond to e.g. ohmic losses 620 due to impedance and aging (and/or estimated state-of-resistance, SoR, of the battery packs/cells as discussed earlier herein, wherein when estimating the internal resistance/ohmic losses, there will be sensitivity to voltage, current, temperature, sensor accuracies over lifetime as well as SoC estimation accuracies/uncertainties), application efficiency losses 621, SoX estimation errors 622 (such when estimating SoH, SoC, and similar), cell-to-cell balancing errors 623, pack-to-pack balancing errors 624 and pack-to-pack SoX synchronization errors 625. In other examples, there may be fewer or more uncertainties taken into account than those shown in FIGS. 6A to 6C.

FIG. 6A shows a first example 600, in which the lower limit $E_{reqLow}$ of the range of minimum required usable energy values is considered, corresponding to assumed minimum values for the uncertainties 620-625. Phrased differently, the example 600 corresponds to a best-case scenario, wherein it is assumed that the uncertainties are as low as statistically indicated, and that the assumed required usable energy is low and corresponds to $E_{reqLow}$. This because a part 610 of the usable energy of the ESS that is not uncertain is here maximized.

FIG. 6B shows another example 602, in which an average required usable energy value $E_{reqAvg}$ is used, defined e.g. as the average of $E_{reqLow}$ and $E_{reqHigh}$, and corresponding to an assumption that the uncertainties 620-625 are of medium size. Phrased differently, the example 602 corresponds to a moderate/medium-case scenario, wherein it is assumed that the uncertainties are neither as low or as high as statistically indicated, and wherein the certain part 610 of the usable energy is smaller than that of example 600, but still larger than that of the example of FIG. 6C.

FIG. 6C shows an example 604 in which the upper limit $E_{reqHigh}$ of the range of minimum required usable energy values is considered, corresponding to assumed maximum values for the uncertainties 620-625. Phrased differently, the example 604 corresponds to a worst-case scenario, wherein it is assumed that the uncertainties are as large as statistically indicated, and that the assumed required usable energy should be large to compensate for the potentially large uncertainties in determining the usable energy of the ESS. Phrased differently, in this worst-case scenario, the certain part 610 of the estimated usable energy of the ESS is small, and this is compensated for by assuming a high(er) minimum required usable energy when defining the SoC window. FIGS. 6A to 6C thus serve to illustrate the realization behind the present disclosure, namely that when there are large uncertainties in estimating the usable energy of the ESS, this can be compensated for by adapting the minimum required usable energy upwards, and vice versa when there are moderate or small uncertainties in the ESS usable energy estimation. This allows a more robust solution for SoC window control, wherein the resulting SoC window is less prone to being wrong due to such uncertainties and thus more likely to actually meet the required usable energy needed to complete a particular task (such as a transport mission for an electric vehicle).

In some examples, the minimum required usable energy value $E_{req}$ may be calculated based on a required minimum range R of the vehicle, e.g. $E_{req} = f(R;\{\theta_j\})$ where $f$ is some function taking into account e.g. the required range R, and various parameters $\theta_j$ including e.g. the route to be driven, the topological properties of the earth along the route, temperature, wind speed, wind direction, surface conditions, a loading of the vehicle, things like SoH and SoC of the ESS at the beginning of the task, and similar. In other examples, the range requirement R may be defined in accordance with one or more contractual agreements, i.e. a manufacturer of an electric vehicle may promise that the vehicle will always be able to obtain the range R.

In some examples, the range of minimum required usable energy values $[E_{reqLow}, E_{reqHigh}]$ may be defined as a mean usable energy value $\overline{E}_{req}$ plus one or more confidence intervals (e.g. $\pm\sigma_{req}$, $\pm 2\sigma_{req}$, etc.), where $\sigma_{req}$ is for example a standard deviation accompanying the estimated mean value $\overline{E}_{req}$. The lower limit $E_{reqLow}$ may for example be defined as $E_{req} - \sigma_{req}$, $\overline{E} - 2\sigma_{req}$, etc., and the upper limit $E_{reqHigh}$ may for example be defined as $E_{req} + \sigma_{req}$, $\overline{E} + 2\sigma_{req}$, etc., and so on.

In some examples, the uncertainties may be used in other ways. For example, one may provide uncertainty information simply in terms of e.g. tolerance ranges of estimations or measurements, and then use e.g. minimum and/or maximum of such tolerance ranges to compute usable energy and adjust the SoC window accordingly. In other examples, the uncertainties may instead be provided in a probabilistic sense, i.e. as probabilities or likelihoods of having an estimate in a certain range. If the indicated probability is high at a certain value, this value may be used as a most likelihood value instead of using e.g. min and max values for further processing. For example, if it is known that SoC (such as a current SoC) is somewhere between e.g. 70% to 75% but it is also known that e.g. 72% corresponds to a most probable value (i.e. a value with the highest likelihood), than this value can be used as a most probable SoC estimate for calculating the usable energy of the ESS. A same or similar approach may be taken also for other parameters for which there are some uncertainty. Phrased differently, instead of using e.g. only minimum and maximum limits of a tolerance range, expected values with maximum likelihood within such a range may be used for calculations, i.e. when it can be shown that a certain value within a range has a high confidence level.

For example, as envisaged herein, it may be estimated that in order to complete a particular task, a minimum required usable energy $E_{req}$ is required (corresponding to a required range R, given either by a particular mission/task or e.g. based on contractual agreement). How much discharging of the ESS that is required (i.e. what SoC window to use) in order to extract an energy corresponding to at least $E_{req}$ can then be decided based on estimations of a current usable energy E of the ESS. As emphasized herein, estimation of E is not perfect, but is subject to the one or more uncertainties $\{\sigma_i\}$. For example, estimations of a current SoC of the ESS may be required to obtain E, and there may be uncertainties in estimating SoC, as $E = g(SoC, ...)$ where g is some function relating at least SoC to E. Uncertainties in SoC will thus result in uncertainties in E, that if not attended to will make it difficult to accurately/robustly decide upon a SoC window that will allow for at least $E_{req}$ to be extracted from the ESS. Instead of using the value $E_{req}$ to define the SoC window, the present disclosure proposes to update/adapt $E_{req}$ based on the one or more uncertainties $\{\sigma_i\}$, to compensate for various factors/errors/uncertainties that may evolve as a function of e.g. aging and ESS usage profile. For example, uncertainties may include those related to ohmic losses due to impedance increase (depending on e.g. aging and/or ESS temperature). For example, uncertainties may include those related to decrease in vehicle and/or application energy efficiency, for example from additional cooling power requirements due to impedance increase (depending on e.g. aging and/or ESS temperature). For example, uncertainties may include those related to coulombic efficiency. For example, uncertainties may include those related to (additional) SoC and/or SoH estimation errors, including errors over lifetime of the ESS. For example, uncertainties may include those related to unusable capacity due to (additional) battery cell-to-cell balancing errors, including errors over lifetime of the ESS. For example, uncertainties may include those related to unusable capacity due to (additional) battery pack-to-pack balancing errors, including errors over lifetime. For example, uncertainties may include those related to unusable capacity due to (additional) battery pack-to-pack SoC estimation synchronization errors, including errors over lifetime. For example, uncertainties may include those related to measurement errors (of e.g. current, voltage, temperature, etc.), including errors over lifetime. One or more or all of these uncertainties may be quantified by the processing circuitry 210 in real-time in terms of tolerances and/or confidence intervals, which are then propagated to the updating/adapting of the minimum required usable energy and results in the latter being transformed into e.g. a range of minimum required usable energy values (and/or a most likely minimum required usable energy value) instead of just a single value $E_{req}$. The adapted minimum required usable energy value (or range of values) is then used as input to the SoC window definition, wherein the exact choice of approach may for example depend on a normal distribution spready and minimum required usable energy range confidence interval, or similar. Phrased differently, contemporary solutions may calculate a minimum required usable energy value $E_{req}$, and update the SoC window to match this requirement, i.e. $SoC_{winLow}$ and $SoC_{winHigh}$ are defined directly based on $E_{req}$ and an estimate of a current usable energy E of the ESS. In the solution as envisaged herein, it is instead envisaged to take into account the one or more uncertainties $\{\sigma_i\}$, and to update the value $E_{req} \rightarrow h(E_{req}, \{\sigma_i\})$ where $h$ is some function/algorithm as envisaged herein. The limits $SoC_{winLow}$ and/or $SoC_{winHigh}$ are then adapted based not on $E_{req}$ but on $h(E_{req}, \{\sigma_i\})$, which provides a more robust solution as the risk of uncertainties making the defined SoC window insufficient to provide $E_{req}$ is thus lowered. How uncertainties in one or more of the mentioned examples affect the estimation of usable energy E may, as envisaged herein, be studied and analyzed using suitable models (numerical and/or analytical) and/or by suitable laboratory experiments, by analysis of historic data of the ESS (e.g. as logged during previous missions), and similar, and be expressed in terms of the range of minimum required usable energy and/or as a most likely/probably minimum required usable energy value as envisaged herein.

In some examples, if it is detected that the SoC cannot be adapted according to $h(E_{req}, \{\sigma_i\})$ due to e.g. aging, a risk of not being able to meet the required energy target $E_{req}$ (including the uncertainties) may be indicated/signaled to e.g. a driver of the vehicle.

As envisaged herein, in some examples, the resulting minimum required usable energy value (or range of values) could be used for fleet management and route planning purposes. Given the updated minimum required usable energy value (or range of values), a certainty/confidence level could be provided for an ability to complete a planned route/mission, or e.g. the result could be used for route planning/route suggestions as part of fleet-planning management, and similar.

The present disclosure also envisages to provide an ESS including the computer system 200 and processing circuitry 210, such as e.g. the ESS 240 described with reference to FIG. 2.

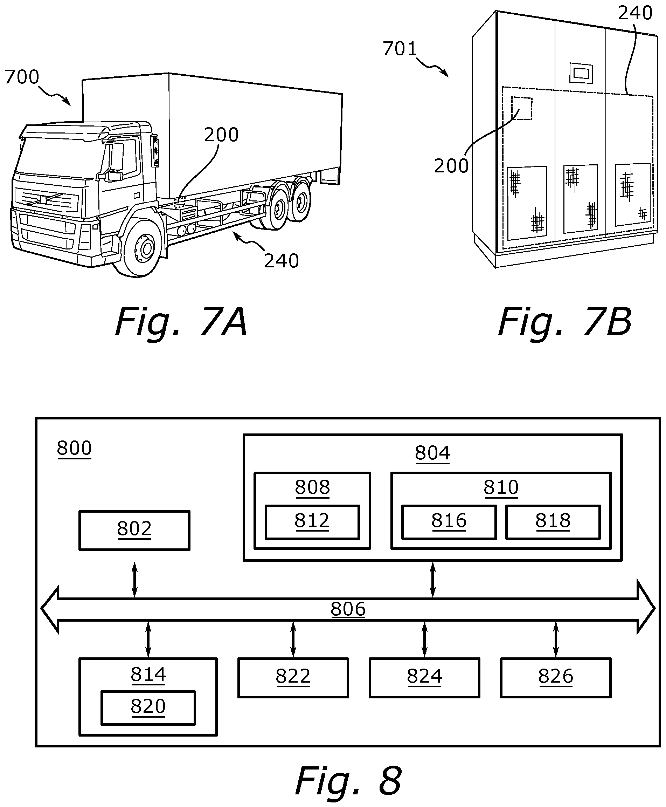

FIG. 7A schematically illustrates an example vehicle as envisaged herein, in form of a box-cargo truck 700. The truck 700 includes the computer system 200 and the ESS 240, allowing the charging and/or discharging of the ESS 240 to be controlled based on the SoC window defined as described herein, with the technical benefits following therefrom. Although here illustrated as a truck 700, the present disclosure is of course not limited to trucks in particular, but also apply to any other type of electric vehicle in which there is an ESS and a need to more robustly control the SoC window for discharging and/or charging of the ESS as described herein. Examples of other vehicles include, but it not limited to, e.g. buses, tractors, (wheel) loaders, (articulated) haulers, semitrailers, tractor plus one or more trailer combinations, and similar. Other vehicles include off-road vehicles or even marine vessels such as ships/boats, and similar, that may also be electric and powered by one or more ESSs as described herein.

FIG. 7B schematically illustrates an example stationary, non-vehicle BESS solution/entity as envisaged herein, here in form of a battery bank 701 configured to deliver (or receive) energy to (or from) a power grid, as part of e.g. a backup- and/or ancillary service. The battery bank 701 includes the ESS 240 and computer system 200 as described herein. The battery bank 701 may for example be installed as part of the power grid itself, and/or be provided as part of an industrial or residential building, or similar. In general, FIG. 7B and the power bank 701 serve to illustrate that the computer system 200, method 300, ESS 240 and overall solution as envisaged herein are not necessarily restricted only to electric vehicles, but may find use in any situation where there is an (B)ESS for which there is a desire to more robustly control a SoC window. An entity such as the battery bank 701 may for example include an ESS where one or more battery packs have been harvested from e.g. an electric vehicle, representing so-called "second use" wherein e.g. battery packs that are no lingered considered useful in electric vehicles may still be used in other, less demanding applications, such as home or industrial energy storage solutions, off-grid solutions, grid solutions, and similar.

FIG. 8 is a schematic diagram of a computer system 800 for implementing examples disclosed herein. The computer system 800 is adapted to execute instructions from a computer-readable medium to perform these and/or any of the functions or processing described herein. The computer system 800 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 800 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 800 may comprise at least one computing device or electronic device capable of including firmware, hardware, and/or executing software instructions to implement the functionality described herein. The computer system 800 may include processing circuitry 802 (e.g., processing circuitry including one or more processor devices or control units), a memory 804, and a system bus 806. The computer system 800 may include at least one computing device having the processing circuitry 802. The system bus 806 provides an interface for system components including, but not limited to, the memory 804 and the processing circuitry 802. The processing circuitry 802 may include any number of hardware components for conducting data or signal processing or for executing computer code stored in memory 804. The processing circuitry 802 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 802 may further include computer executable code that controls operation of the programmable device.

The system bus 806 may be any of several types of bus structures that may further interconnect to a memory bus (with or without a memory controller), a peripheral bus, and/or a local bus using any of a variety of bus architectures. The memory 804 may be one or more devices for storing data and/or computer code for completing or facilitating methods described herein. The memory 804 may include database components, object code components, script components, or other types of information structure for supporting the various activities herein. Any distributed or local memory device may be utilized with the systems and methods of this description. The memory 804 may be communicably connected to the processing circuitry 802 (e.g., via a circuit or any other wired, wireless, or network connection) and may include computer code for executing one or more processes described herein. The memory 804 may include non-volatile memory 808 (e.g., read-only memory (ROM), erasable programmable read-only memory (EPROM), electrically erasable programmable read-only memory (EEPROM), etc.), and volatile memory 810 (e.g., random-access memory (RAM)), or any other medium which can be used to carry or store desired program code in the form of machine-executable instructions or data structures and which can be accessed by a computer or other machine with processing circuitry 802. A basic input/output system (BIOS) 812 may be stored in the non-volatile memory 808 and can include the basic routines that help to transfer information between elements within the computer system 800.

The computer system 800 may further include or be coupled to a non-transitory computer-readable storage medium such as the storage device 814, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 814 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 814 and/or in the volatile memory 810, which may include an operating system 816 and/or one or more program modules 818. All or a portion of the examples disclosed herein may be implemented as a computer program 820 stored on a transitory or non-transitory computer-usable or computer-readable storage medium (e.g., single medium or multiple media), such as the storage device 814, which includes complex programming instructions (e.g., complex computer-readable program code) to cause the processing circuitry 802 to carry out actions described herein. Thus, the computer-readable program code of the computer program 820 can comprise software instructions for implementing the functionality of the examples described herein when executed by the processing circuitry 802. In some examples, the storage device 814 may be a computer program product (e.g., readable storage medium) storing the computer program 820 thereon, where at least a portion of a computer program 820 may be loadable (e.g., into a processor) for implementing the functionality of the examples described herein when executed by the processing circuitry 802. The processing circuitry 802 may serve as a controller or control system for the computer system 800 that is to implement the functionality described herein.

The computer system 800 may include an input device interface 822 configured to receive input and selections to be communicated to the computer system 800 when executing instructions, such as from a keyboard, mouse, touch-sensitive surface, etc. Such input devices may be connected to the processing circuitry 802 through the input device interface 822 coupled to the system bus 806 but can be connected through other interfaces, such as a parallel port, an Institute of Electrical and Electronic Engineers (IEEE) 1394 serial port, a Universal Serial Bus (USB) port, an IR interface, and the like. The computer system 800 may include an output device interface 824 configured to forward output, such as to a display, a video display unit (e.g., a liquid crystal display (LCD) or a cathode ray tube (CRT)). The computer system 800 may include a communications interface 826 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In summary of all of the above, it has herein been presented a solution that more robustly controls a SoC window in order to meet a desired minimum required usable energy of an ESS, wherein the desired minimum required usable energy is adapted based on uncertainties associated with ESS usable energy estimation as described herein.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

The following is a non-exhaustive list of examples as envisaged herein:

Example 1: A computer system including processing circuitry configured to: - obtain a minimum required usable energy value for an electric energy storage system, ESS; - obtain one or more indications of one or more uncertainties for ESS usable energy estimation associated with at least one of i) aging of the ESS, ii) usage of the ESS, and iii) measurement errors of one or more parameters of the ESS; - adapt, based on the indicated one or more uncertainties, the minimum required usable energy value to a most likely minimum required usable energy value and/or a range of minimum required usable energy values for the ESS; - define a state-of-charge, SoC, window for the ESS to match the most likely minimum required usable energy value and/or a value within the range of minimum required usable energy values, and control a discharging and/or charging of the ESS in accordance with the SoC window.

Example 2: The computer system of example 1, wherein the one or more uncertainties for ESS usable energy estimation are associated with ohmic losses of the ESS due to impedance increasing with age and/or temperature of the ESS.

Example 3: The computer system of example 1 or 2, wherein the one or more uncertainties for ESS usable energy estimation are associated with estimation errors of ESS state-of-charge, SoC, and/or state-of-health, SoH.

Example 4: The computer system of any one of examples 1 to 3, wherein the one or more uncertainties for ESS usable energy estimation are associated with unusable ESS capacity due to cell-to-cell and/or pack-to-pack balancing errors.

Example 5: The computer system of any one of the preceding examples, wherein the one or more uncertainties for ESS usable energy estimation are associated with ESS pack-to-pack state-of-charge, SoC, estimation synchronization errors.

Example 6: The computer system of any one of the preceding examples, wherein the ESS forms part of an electric vehicle, and wherein the processing circuitry is further configured to calculate the minimum required usable energy value based on a minimum range requirement for the vehicle.

Example 7: The computer system of any one of the preceding examples, wherein the processing circuitry is configured to define the range of minimum required usable energy values as a mean required usable energy value plus one or more confidence intervals for the required usable energy value.

Example 8: The computer system of any one of the preceding examples, wherein the processing circuitry is configured to define the SoC window based on an upper limit of the range of minimum required usable energy.

Example 9: The computer system of any one of examples 1 to 7, wherein the processing circuitry is configured to define the SoC window based on a mean value of the range of minimum required usable energy.

Example 10: The computer system of any one of examples 1 to 7, wherein the processing circuitry is configured to define the SoC window based on a lower limit of the range of minimum required usable energy.

Example 11: The computer system of any one of examples 1 to 10, wherein the processing circuitry is further configured to detect that the SoC window cannot be adapted according to the updated minimum required usable energy value due to e.g. aging, and to indicate/signal a risk of not being able to meet the required energy target $E_{req}$ (including the uncertainties) to e.g. a driver of the vehicle.

Example 12: The computer system of any one of examples 1 to 11, wherein the one or more uncertainties for ESS usable energy estimation are associated with state-of-resistance (SoR) estimation accuracies/uncertainties.

Example 13: The computer system of any one of examples 1 to 12, wherein the processing circuitry is configured to obtain at least some of the uncertainties from datasheets, manufacturer data and/or from laboratory experiments.

Example 14: The computer system of any one of examples 1 to 13, wherein the processing circuitry is configured to perform SoC estimation using at least one Kalman filter.

Example 15: The computer system of example 14, wherein an indication of uncertainty of said SoC estimation is obtained from a covariance matrix of the Kalman Filter.

Example 16: An energy storage system, ESS, including the computer system of any one of examples 1 to 15.

Example 17: An electric vehicle, including the computer system of any one of examples 1 to 15 and the energy storage system, ESS.

Example 18: A computer-implemented method, including: - obtaining, by processing circuitry of a computer system, a minimum required usable energy value for an electric energy storage system, ESS; - obtaining, by the processing circuitry, one or more indications of one or more uncertainties for ESS usable energy estimation associated with at least one of i) aging of the ESS, ii) usage of the ESS, and iii) measurement errors of one or more parameters of the ESS; - adapting, by the processing circuitry and based on the indicated one or more uncertainties, the minimum required usable energy value to a most likely minimum required usable energy value and/or a range of minimum required usable energy values for the ESS; - defining, by the processing circuitry, a state-of-charge, SoC, window for the ESS to match the most likely minimum required energy value and/or a value within the range of minimum required usable energy values, and controlling, by the processing circuitry, a discharging and/or charging of the ESS in accordance with the SoC window.

Example 19: A computer program product including program code for performing, when executed by the processing circuitry, the method of example 18.

Example 20: A non-transitory computer-readable storage medium including instructions, which when executed by the processing circuitry, cause the processing circuitry to perform the method of example 18.

**Claims**

1. A computer system comprising processing circuitry configured to:

   - obtain a minimum required usable energy value ($E_{req}$) for an electric energy storage system, ESS;
   - obtain one or more indications of one or more uncertainties for ESS usable energy estimation associated with at least one of i) aging of the ESS, ii) usage of the ESS, and iii) measurement errors of one or more parameters of the ESS;
   - adapt, based on the indicated one or more uncertainties, the minimum required usable energy value to a most likely minimum required usable energy ( $E_{req}^{*}$ ) value and/or a range of minimum required usable energy values ([$E_{reqLow}$, $E_{reqHigh}$]) for the ESS;
   - define a state-of-charge, SoC, window ([$SoC_{winLow}$, $SoC_{winHigh}$]) for the ESS to match the most likely minimum required usable energy value and/or a value within the range of minimum required usable energy values, and
   - control a discharging and/or charging of the ESS in accordance with the SoC window.

2. The computer system of claim 1, wherein the one or more uncertainties for ESS usable energy estimation are associated with ohmic losses of the ESS due to impedance increasing with age and/or temperature of the ESS.

3. The computer system of claim 1 or 2, wherein the one or more uncertainties for ESS usable energy estimation are associated with estimation errors of ESS state-of-charge, SoC, and/or state-of-health, SoH.

4. The computer system of any one of claims 1 to 3, wherein the one or more uncertainties for ESS usable energy estimation are associated with unusable ESS capacity due to cell-to-cell and/or pack-to-pack balancing errors.

5. The computer system of any one of the preceding claims, wherein the one or more uncertainties for ESS usable energy estimation are associated with ESS pack-to-pack state-of-charge, SoC, estimation synchronization errors.

6. The computer system of any one of the preceding claims, wherein the ESS forms part of an electric vehicle, and wherein the processing circuitry is further configured to calculate the minimum required usable energy value based on a minimum range requirement for the vehicle.

7. The computer system of any one of the preceding claims, wherein the processing circuitry is configured to define the range of minimum required usable energy values as a mean required usable energy value plus one or more confidence intervals for the required usable energy value.

8. The computer system of any one of the preceding claims, wherein the processing circuitry is configured to define the SoC window based on an upper limit ($E_{reqHigh}$) of the range of minimum required usable energy.

9. The computer system of any one of claims 1 to 7, wherein the processing circuitry is configured to define the SoC window based on a mean value ($E_{reqMean}$) of the range of minimum required usable energy.

10. The computer system of any one of claims 1 to 7, wherein the processing circuitry is configured to define the SoC window based on a lower limit ($E_{reqLow}$) of the range of minimum required usable energy.

11. An energy storage system, ESS, comprising the computer system of any one of claims 1 to 10.

12. An electric vehicle, comprising the computer system of any one of claims 1 to 10 and the energy storage system, ESS.

13. A computer-implemented method, comprising:

    - obtaining, by processing circuitry of a computer system, a minimum required usable energy value for an electric energy storage system, ESS;
    - obtaining, by the processing circuitry, one or more indications of one or more uncertainties for ESS usable energy estimation associated with at least one of i) aging of the ESS, ii) usage of the ESS, and iii) measurement errors of one or more parameters of the ESS;

- adapting, by the processing circuitry and based on the indicated one or more uncertainties, the minimum required usable energy value to a most likely minimum required usable energy value and/or a range of minimum required usable energy values ($[E_{reqLower}, E_{reqUpper}]$) for the ESS;

- defining, by the processing circuitry, a state-of-charge, SoC, window ($[SoC_{winLow}, SoC_{winHigh}]$) for the ESS to match the most likely minimum required energy value and/or a value within the range of minimum required usable energy values, and

- controlling, by the processing circuitry, a discharging and/or charging of the ESS in accordance with the SoC window.

**14.** A computer program product comprising program code for performing, when executed by the processing circuitry, the method of claim 13.

**15.** A non-transitory computer-readable storage medium comprising instructions, which when executed by the processing circuitry, cause the processing circuitry to perform the method of claim 13.

SoC

100

| 120 | 110 | 122 |

130  132

Fig. 1

270  274

276

220  272  210  252

222  200  250

260

232

230

240  242-1  ...  242-M

244-1  244-M

Fig. 2

300

S310 → S320 → S330 → S340 → S350

Fig. 3

Fig. 4

Fig. 5A

Fig. 5B

Fig. 5C

Fig. 6A

Fig. 6B

Fig. 6C

Fig. 7A

Fig. 7B

Fig. 8

Europäisches
Patentamt

European
Patent Office

Office européen
des brevets

# EUROPEAN SEARCH REPORT

**Application Number**

EP 24 21 0982

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/406151 A1 (AUDHAV TOVE [SE] ET AL) 21 December 2023 (2023-12-21) * paragraphs [0041], [0067], [0071] - [0074], [0086]; figures 1,3 * ----- | 1-15 | INV. B60L58/13 B60L58/16 B60L3/00 |
| X | US 2015/306971 A1 (CHANG XIAOGUANG [US] ET AL) 29 October 2015 (2015-10-29) * paragraphs [0044] - [0069] * ----- | 1-15 | |

**TECHNICAL FIELDS SEARCHED (IPC)**

B60L

The present search report has been drawn up for all claims

| Place of search | Date of completion of the search | Examiner |
|---|---|---|
| The Hague | 11 April 2025 | Bellatalla, Filippo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...............................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 21 0982

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2025

| Patent document cited in search report | Publication date | Patent family member(s) | Publication date |
|---|---|---|---|
| US 2023406151 A1 | 21-12-2023 | EP 4293639 A1<br>US 2023406151 A1 | 20-12-2023<br>21-12-2023 |
| US 2015306971 A1 | 29-10-2015 | CN 105034835 A<br>DE 102015207674 A1<br>US 2015306971 A1 | 11-11-2015<br>29-10-2015<br>29-10-2015 |

EPO FORM P0459

For more details about this annex : see Official Journal of the European Patent Office, No. 12/82